# EUROPEAN PATENT APPLICATION

(11) **EP 4 318 356 A1**
(43) Date of publication of application: **07.02.2024**
(21) Application number: 23176644.5
(22) Date of filing: 01.06.2023
(51) Int. Cl.: G06Q 20/40, H04L 9/00

(54) **CONSIDERATION DISTRIBUTION PROGRAM, CONSIDERATION DISTRIBUTION METHOD, AND CONSIDERATION DISTRIBUTION APPARATUS**

(30) Priority: 05.08.2022 JP 2022125843
(71) Applicant: FUJITSU LIMITED, Kawasaki-shi, Kanagawa 211-8588 (JP)
(72) Inventor: MIYAMAE, Takeshi, Kawasaki-shi, Kanagawa, 211-8588 (JP); ZHANG, Shenbin, Beijing 100022 (CN)
(74) Representative: Hoffmann Eitle

(57) **Abstract**

A consideration distribution program that causes at least one computer to execute a process that includes performing verification of validity of a first transaction stored in a blockchain, the first transaction including a first cumulative consideration from a most upstream process of a supply chain to a certain process, the first transaction being locked in one step downstream process by using a hash value based on a certain random number; storing a second transaction in the blockchain when a result of the verification is valid, the second transaction including a second cumulative consideration from the most upstream process to one step upstream process, the second transaction being locked; acquiring the first cumulative consideration by unlocking the first transaction based on the certain random number; and sending the certain random number to the one step downstream process.

## Description

### FIELD

The embodiments discussed herein are related to a consideration distribution program, a consideration distribution method, and a consideration distribution apparatus.

### BACKGROUND

Heretofore, in traceability management in a supply chain, it has been known to apply a distributed ledger technology using a blockchain and a technology for managing a smart contract in which a transaction condition is described in a distributed ledger. A virtual economic zone by intangible value circulation using such a mechanism is called a social chain or the like.

Environmental problems such as climate change, industrial water pollution, and the use of a large amount of water have been raised in recent years, and it is desired that participants in a supply chain be encouraged to reform consciousness and change action in order to reduce environmental loads. Accordingly, efforts are being made to realize a virtual economic zone that enriches the world by indexing activities that have not been recognized as values so far and circulating the values. For example, information such as CO₂ emissions in each stage of a supply chain is included in a commodity as an intangible value token, and is circulated in the entire supply chain from a manufacturer to a seller and from the seller to consumers. By using such a social chain, both companies and consumers change their actions so as to produce better results for the environment and society as a whole by the dynamics of virtual economy by transactions or the like in which the intangible value is evaluated.

However, a supply chain has a problem in that it is difficult for a consumer who desires to purchase a product having a slightly high value but good for the environment to understand under what kind of environmental contribution the product to be purchased is manufactured. Another problem with the supply chain is that it is difficult for companies to collect the costs for environmental contribution, such as reduction of CO₂ emissions and use of ecological materials, without imbalance among the companies, and it is difficult to achieve continuous environmental contribution.

Accordingly, in a social chain, solutions to these problems have been studied from the following two points of view. One is a technology for visualizing and circulating an intangible value. For example, a trail management technology for visualizing an intangible value generated by a supply chain may attract a consumer's interest in the intangible value. A token generation technology for generating a token based on trail information may provide consumers and investors with an opportunity to invest in an intangible value. The other one is a technology for returning an appropriate consideration for an intangible value. For example, a consideration returning technology for distributing a token based on trail information may achieve that an appropriate consideration for an intangible value is returned to a supplier.

As a mechanism based on these two points of view, a mechanism has been proposed in which a consideration corresponding to an intangible value is returned from a consumer to a supply chain, and this consideration is distributed according to the value of each process in the supply chain by a smart contract managed on a blockchain.

As an information management technology using a blockchain, a technology has been proposed in which an advertiser records a commodity sales performance on the blockchain in the form of zero-knowledge proof, and results of an advertisement is proven by a viewer linking the advertisement performance and the commodity sales performance. A technology has been proposed in which a blockchain is configured by arranging an edge node for each base station area of cellular phone communication, and a supplier requests the edge node of the own base station area for a smart contract. A technology has been proposed in which, in a seller system using a blockchain, the accounts of a seller and a customer are anonymized by using zero-knowledge proof. A technology has been proposed in which consistency of a transaction amount and change that have been committed on a blockchain is ensured by using probabilistic homomorphic encryption and zero-knowledge proof. A technology has been proposed in which a plurality of sessions of zero-knowledge interaction proof protocol performed in parallel between a prover device and a plurality of verifier devices for secret information held by the prover device.

U.S. Patent Application Publication No. 2020/0334708, U.S. Patent Application Publication No. 2022/0038289, Japanese National Publication of International Patent Application No. 2022-510790, Japanese National Publication of International Patent Application No. 2020-515885, and Japanese Laid-open Patent Publication No. 2006-41836 are disclosed as related art.

### SUMMARY

### [TECHNICAL PROBLEM]

However, in a system in which a consideration is distributed according to the value of each process in a supply chain by a smart contract, there is a case in which consideration distribution is performed along the route of a supply chain. One reason for this is that, in a case where a trusted third party organization is not assumed, transfer of a consideration in a peer-to-peer way is forced. Another reason is that, in a case where a cumulative value is concealed from the viewpoint of privacy protection, since the information on cumulative value other than that of the immediately upstream supplier is concealed for each supplier, consideration distribution along the route of a supply chain is easy as a mechanism. Another reason is that, even in a case where a cumulative value is not concealed, sometimes, a remittance method with a very low commission compared to the amount of consideration may not be provided between a consumer and a supplier. However, this reason is based on the assumption that the suppliers use a remittance method with a very low commission such as a payment channel on a regular basis. As described above, in a case where consideration distribution is performed along the route of a supply chain, there is a risk that a malicious supplier makes away with part or all of the consideration. For this reason, in a consideration distribution technology in a supply chain of related art, it is difficult to sufficiently ensure the safety of a supply chain.

In consideration of the above-described circumstances, an object of the disclosed technology is to provide a consideration distribution program, a consideration distribution method, and a consideration distribution apparatus that improve security in a supply chain.

### [SOLUTION TO PROBLEM]

According to an aspect of the embodiments, a consideration distribution program that causes at least one computer to execute a process, the process includes performing verification of validity of a first transaction stored in a blockchain, the first transaction including a first cumulative consideration from a most upstream process of a supply chain to a certain process, the first transaction being locked in one step downstream process from the certain process by using a hash value based on a certain random number; storing a second transaction in the blockchain when a result of the verification is valid, the second transaction including a second cumulative consideration from the most upstream process to one step upstream process from the certain process, the second transaction being locked; acquiring the first cumulative consideration by unlocking the first transaction based on the certain random number; and sending the certain random number to the one step downstream process.

The object and advantages of the invention will be realized and attained by means of the elements and combinations particularly pointed out in the claims.

It is to be understood that both the foregoing general description and the following detailed description are exemplary and explanatory and are not restrictive of the invention.

### [ADVANTAGEOUS EFFECTS OF INVENTION]

According to one aspect, the present disclosure may improve security in a supply chain.

### BRIEF DESCRIPTION OF DRAWINGS

FIG. 1 is a system configuration diagram of a supply chain system according to Embodiment 1;
FIG. 2 is a block diagram of a consideration distribution apparatus;
FIG. 3 is a diagram illustrating an overview of consideration distribution processing in the supply chain system according to Embodiment 1;
FIG. 4A and FIG. 4B are a sequence diagram of consideration distribution processing by the supply chain system according to Embodiment 1;
FIG. 5 is a schematic diagram of consideration distribution processing by a supply chain system according to Embodiment 2; and
FIG. 6 is a hardware configuration diagram of a consideration distribution apparatus.

### DESCRIPTION OF EMBODIMENTS

Hereinafter, embodiments of a consideration distribution program, a consideration distribution method, and a consideration distribution apparatus disclosed in the present application will be described in detail based on the drawings. The consideration distribution program, consideration distribution method, and consideration distribution apparatus disclosed in the present application are not limited by the following embodiments.

### [Embodiment 1]

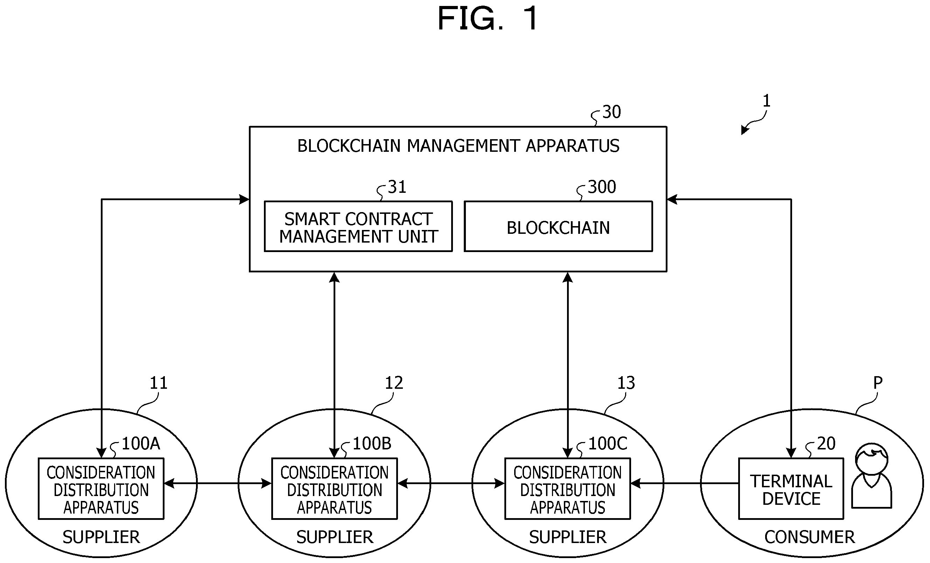

FIG. 1 is a system configuration diagram of a supply chain system according to Embodiment 1. In a supply chain related to a certain product, a supply chain system 1 according to the present embodiment appropriately distributes a consideration for a physical value and an intangible value of a part added by each of suppliers 11 to 13 along the route of the supply chain according to addition of the intangible value. The supply chain system 1 according to the present embodiment performs distribution of consideration using a technology called hashed time lock contract (HTLC). HTLC is a mechanism in which a "hash value is inserted into transaction data" when a remitter remits a consideration, and a person who has provided a random number on which the hash value is based may unlock the value.

The supply chain in the present embodiment means a series of processes from procurement of raw materials and parts of a product to manufacturing, inventory management, sale, and delivery in a manufacturing process. The value of each part of a product manufactured by the supply chain of the present embodiment is an example of the value of a process of manufacturing the part among manufacturing processes included in the supply chain.

In the supply chain system 1 according to the present embodiment, there are three suppliers 11 to 13 and a consumer P. For example, each of the suppliers 11 to 13 adds a part in the order of the suppliers 11, 12, and 13, and finishes a product. At this time, each of the suppliers 11 to 13 adds an intangible value to each part by making efforts such as taking account of the environment in the manufacturing of each part. The finished product is provided to the consumer P. The intangible value added by each of the suppliers 11 to 13 is accumulated and provided to the consumer P together with the product as an accumulated intangible value. In the following description, in a case where the suppliers 11 to 13 are not distinguished from one another, the suppliers are referred to as a supplier 10.

For example, an intangible value is an environmental value generated in a manufacturing process of a part. For example, the environmental value may be an index indicating a degree of contribution to environmental maintenance or reduction in environmental load.

In the following description, in a supply chain, a process (part) upstream of a certain process (part) may be referred to as an upstream process (upstream part), and a process (part) downstream of the certain process (part) may be referred to as a downstream process (downstream part).

The consumer P pays a consideration for the provided product and the accumulated intangible value added to the product. The paid consideration is paid by being distributed to each of the suppliers 11 to 13. Hereinafter, consideration distribution in the supply chain system 1 will be described in detail.

As illustrated in FIG. 1, in the supply chain system 1, consideration distribution apparatuses 100A to 100C that the suppliers 11 to 13 respectively have, a terminal device 20 that the consumer P has, and a blockchain management apparatus 30 are arranged. Hereinafter, in a case where the consideration distribution apparatuses 100A to 100C are not distinguished from one another, the consideration distribution apparatuses are referred to as a consideration distribution apparatus 100.

The consideration distribution apparatus 100 and the terminal device 20, and the blockchain management apparatus 30 are coupled via a network and may communicate with each other. The suppliers 10 having a transaction relationship in the supply chain, for example, the supplier 11 and the supplier 12, and the supplier 12 and the supplier 13, include a communication channel for directly performing transmission and reception of data. For example, the consideration distribution apparatus 100A and the consideration distribution apparatus 100B are coupled via a network, and the consideration distribution apparatus 100B and the consideration distribution apparatus 100C are coupled via a network. Between the consumer P and the supplier 13 of the most downstream process, there is a communication channel for directly performing transmission and reception of data. For example, the consideration distribution apparatus 100C and the terminal device 20 are coupled via a network.

The blockchain management apparatus 30 is an apparatus that manages a distributed ledger included in the supply chain system 1, and includes a plurality of devices coupled to each other by a peer-to-peer (P2P) method.

The blockchain management apparatus 30 includes a smart contract management unit 31 and a blockchain 300. The smart contract management unit 31 manages a smart contract stored in the blockchain 300. The blockchain 300 may be used in a supply chain. In that case, a part registration smart contract and part information are stored. The blockchain 300 stores information on the part provided in each of the suppliers 10 and the single value of the intangible value, and the cumulative value from the most upstream supplier 11 to the supplier 10.

The terminal device 20 receives, from the consideration distribution apparatus 100A, a hash value based on a random number generated by the consideration distribution apparatus 100A of the supplier 11 of the most upstream process. The terminal device 20 generates a remittance transaction, which is a transaction in which the supplier 13 is the destination for remittance of a cumulative consideration that is a consideration of the cumulative value for the suppliers 11 to 13, and locked by using a hash value. The terminal device 20 sends the generated remittance transaction to the blockchain 300.

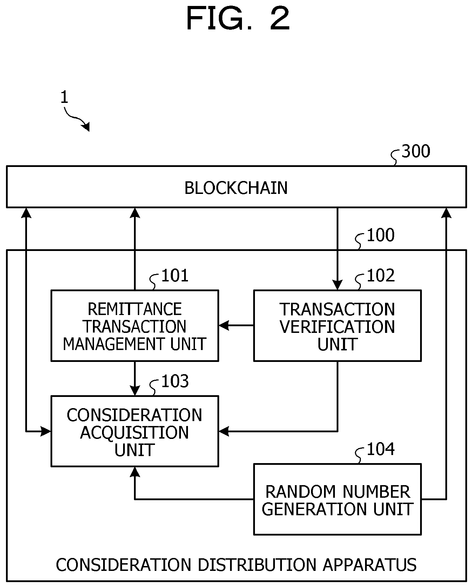

FIG. 2 is a block diagram of a consideration distribution apparatus. Next, description will be given for distribution of the cumulative consideration sent from the terminal device 20 in the suppliers 11 to 13. In this description, the supplier 10 includes the consideration distribution apparatus 100.

As illustrated in FIG. 2, the consideration distribution apparatus 100 includes a remittance transaction management unit 101, a transaction verification unit 102, a consideration acquisition unit 103, and a random number generation unit 104. It is sufficient that the random number generation unit 104 is included in the consideration distribution apparatus 100 of the most upstream process. The other consideration distribution apparatuses 100 do not have to include the random number generation unit 104.

The random number generation unit 104 operates in the consideration distribution apparatus 100 of the most upstream process. The random number generation unit 104 generates an appropriate random number. The random number generation unit 104 calculates a hash value of the generated random number, and sends the calculated hash value to the terminal device 20 of the consumer P. For example, the random number generation unit 104 may send the hash value to the terminal device 20 by sending, to the blockchain 300, a transaction including the hash value for which the right of browsing is limited to the consumer P. Alternatively, in a case where there is a communication channel for directly performing transmission and reception of data between the consumer P and the supplier 11 of the most upstream process, the random number generation unit 104 may send the hash value to the consumer P by using the communication channel.

The transaction verification unit 102 confirms that a remittance transaction of the cumulative consideration up to an own process, in which an own apparatus is the destination and which is locked with a hash value based on a random number, is registered in the blockchain 300 from the immediately downstream consideration distribution apparatus 110. An own process is a process performed by the supplier 10 having an own apparatus. In a case of the consideration distribution apparatus 100 of the most downstream process, the transaction verification unit 102 confirms the registration by the consumer P of a similar remittance transaction. This remittance transaction registered from the immediately downstream process, which is the target of verification by the transaction verification unit 102, is an example of a "first transaction".

Next, the transaction verification unit 102 acquires, from the remittance transaction, the hash value calculated from the random number generated by the consideration distribution apparatus 100 of the most upstream process. The transaction verification unit 102 verifies the validity of the sent remittance transaction by using the acquired hash value. For example, the transaction verification unit 102 performs verification of the remittance transaction by using zero-knowledge proof based on the single value by the own supplier 10 stored in the blockchain 300 and the cumulative value up to the own process from the supplier 10 of the most upstream process.

When the remittance transaction is not valid, the transaction verification unit 102 determines to cancel the procedure. Accordingly, the consideration distribution apparatus 100 cancels the procedure of consideration distribution. In this case, none of the suppliers 11 to 13 may obtain a consideration.

By contrast, when the remittance transaction is valid, the transaction verification unit 102 instructs the remittance transaction management unit 101 to send a transaction. The transaction verification unit 102 outputs, to the remittance transaction management unit 101, the hash value calculated from the random number generated by the consideration distribution apparatus 100 of the most upstream process.

However, in a case of the consideration distribution apparatus 100 of the most upstream process, when the remittance transaction is valid, the transaction verification unit 102 instructs the consideration acquisition unit 103 to acquire the cumulative consideration.

The remittance transaction management unit 101 receives, from the transaction verification unit 102, the instruction to send a transaction together with the hash value calculated from the random number generated by the consideration distribution apparatus 100 of the most upstream process. Next, the remittance transaction management unit 101 generates a remittance transaction, in which an own apparatus is the destination and which includes the cumulative consideration up to the immediately upstream process and is locked with a hash value calculated from a random number. The remittance transaction management unit 101 causes the hash value calculated from the random number generated by the consideration distribution apparatus 100 of the most upstream process to be included in the remittance transaction. The remittance transaction management unit 101 sends the generated remittance transaction to the blockchain 300. This remittance transaction sent from the remittance transaction management unit 101 is an example of a "second transaction". However, this remittance transaction is a "first transaction" when viewed from the destination consideration distribution apparatus 100.

For example, the remittance transaction management unit 101 generates the following remittance transaction and sends the remittance transaction to the blockchain 300. The remittance transaction management unit 101 sets a transaction output for the cumulative consideration owned by itself as a transaction input. The remittance transaction management unit 101 sets a script described as "capable of reception if any one of the following conditions is satisfied" as a transaction output. For example, the remittance transaction management unit 101 sets one of the conditions as a case in which a predetermined limited period such as 30 days elapses and a correct signature of a sender is added. The remittance transaction management unit 101 sets the other condition as a case in which a hash value of a designated numerical value matches the registered hash value and a correct signature of the supplier 10 is added. The cumulative consideration sent by this remittance transaction is returned to the consumer P when a random number is not disclosed and consideration distribution fails.

The consideration acquisition unit 103 confirms that a transaction has been incorporated into the blockchain 300, the transaction being a transaction in which a remittance transaction transmitted from the own apparatus and locked with a hash value is unlocked and a cumulative consideration is sent to the immediately upstream consideration distribution apparatus 100. Hereinafter, a transaction in which a remittance transaction locked with a hash value is unlocked and a cumulative value included in the remittance transaction is sent is referred to as a "release transaction". However, the consideration acquisition unit 103 in the consideration distribution apparatus 100 of the most upstream process does not perform confirmation of a release transaction.

Next, the consideration acquisition unit 103 acquires the random number generated by the consideration distribution apparatus 100 of the most upstream process from the release transaction sent by the immediately upstream consideration distribution apparatus 100. However, in the case of the consideration distribution apparatus 100 of the most upstream process, the consideration acquisition unit 103 acquires a random number from the random number generation unit 104, and receives, from the transaction verification unit 102, an instruction to acquire a cumulative consideration.

Next, the consideration acquisition unit 103 sends a release transaction to the blockchain 300, the release transaction being a transaction in which the random number is disclosed, the remittance transaction of which destination is the own apparatus and in which the cumulative value is locked is unlocked, and the cumulative consideration included therein is sent to the supplier 10.

For example, the consideration acquisition unit 103 generates the following release transaction and sends the release transaction to the blockchain 300. The consideration acquisition unit 103 sets, as transaction inputs, an identifier of the remittance transaction to be unlocked, a random number, and a signature of the own supplier 10 for the remittance transaction to be unlocked. The consideration acquisition unit 103 sets, as a transaction output, a script that enables reception when the correct signature of the own supplier 10 is added.

After the release transaction is sent, when it is determined by a miner who is a verifier that the disclosed random number is valid, the supplier 10 may acquire the cumulative consideration included in the remittance transaction. As described above, the supply chain system 1 executes consideration distribution by using HTLC in which a remittance transaction is locked with a hash value of a random number, the remittance transaction is unlocked by using a release transaction that discloses the random number, and a cumulative consideration is acquired.

A miner is a verifier of a transaction in the blockchain 300. For example, a miner confirms that the parameters given by the transaction inputs of a release transaction sent from the consideration distribution apparatus 100 to the blockchain 300 are correct. For example, a miner searches for a release transaction, refers to the contents of the release transaction, executes the script of the transaction output with a random number and a signature of the sender for the release transaction as arguments, and determines that the random number is appropriate when a normal response is obtained. For example, a miner calculates a hash value by using a predetermined hash function for a disclosed random number, and determines whether the disclosed random number is correct depending on whether the calculated hash value matches the hash value included in a remittance transaction. There is a plurality of miners. When approximately half of the miners confirm a normal response, the release transaction is incorporated into the blockchain 300, the locked cumulative value is unlocked, and the ownership is transferred to the supplier 10 that is the sender.

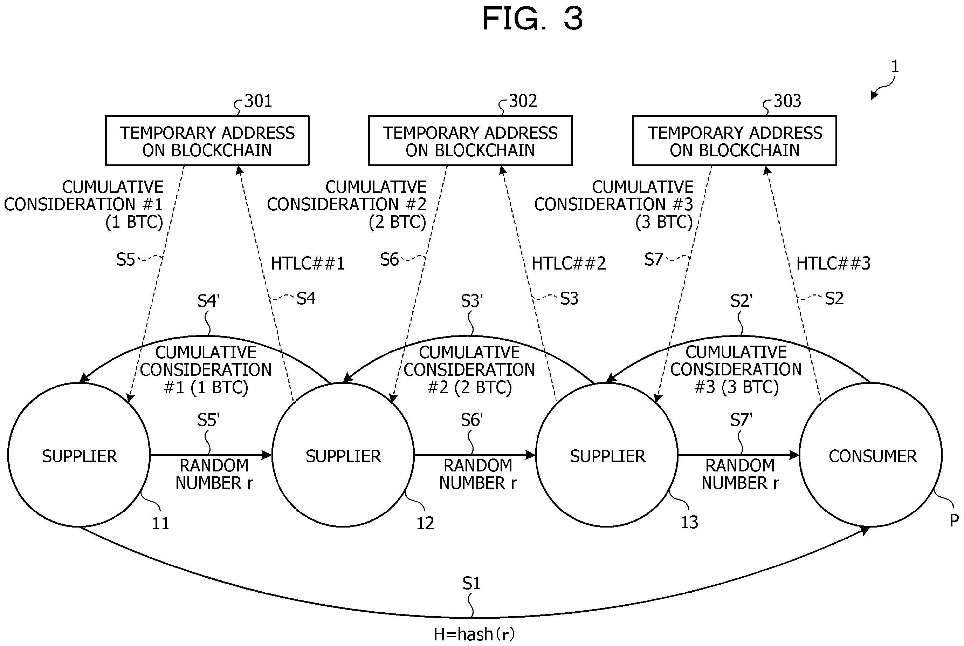

FIG. 3 is a diagram illustrating an overview of consideration distribution processing in the supply chain system according to Embodiment 1. Next, an overview of consideration distribution processing in the supply chain system 1 will be summarized and described with reference to FIG. 3. Although it is described below that data included in a transaction is directly transmitted and received between the suppliers 11 to 13 and the consumer P, transmission and reception of the data included in a transaction is actually performed through the blockchain 300. In this diagram, description will be given for a case in which the consumer P pays 3 bitcoins (BTC) and each of the suppliers 11 to 13 receives 1 BTC as a consideration.

The random number generation unit 104 of the consideration distribution apparatus 100A of the supplier 11 generates a random number r. After that, the random number generation unit 104 sends a hash value H = hash(r) calculated from the generated random number r to the terminal device 20 of the consumer P (step S1).

The terminal device 20 sends, to a temporary address 303 on the blockchain 300, a remittance transaction that includes 3 BTC, which is the cumulative consideration of the suppliers 11 to 13, in which the supplier 13 is the destination, and that is locked with the hash value H (step S2). In this diagram, this remittance transaction is indicated as HTLC##3. Temporary addresses 301 to 303 on the blockchain 300 represent transaction outputs that are scripts described as capable of reception if a predetermined condition is satisfied. In this way, the consumer P sends cumulative consideration #3 locked with the hash value H and including 3 BTC to the supplier 13 (step S2').

The transaction verification unit 102 of the consideration distribution apparatus 100C of the supplier 13 verifies the validity of HTLC##3 including cumulative consideration #3 sent from the consumer P. When HTLC##3 including cumulative consideration #3 is valid, the remittance transaction management unit 101 of the consideration distribution apparatus 100C generates a remittance transaction that includes 2 BTC, which is the cumulative consideration of the suppliers 11 to 12, and in which the supplier 12 is the destination and the remittance transaction is locked with the hash value H. The remittance transaction management unit 101 of the consideration distribution apparatus 100C sends HTLC##2, which is the generated remittance transaction, to the temporary address 302 on the blockchain 300 (step S3). In this way, the supplier 13 sends cumulative consideration #2 locked with the hash value H and including 2 BTC to the supplier 12 (step S3').

The transaction verification unit 102 of the consideration distribution apparatus 100B of the supplier 12 verifies the validity of HTLC##2 including cumulative consideration #2 sent from the consideration distribution apparatus 100C of the supplier 13. When HTLC##2 including cumulative consideration #2 is valid, the remittance transaction management unit 101 of the consideration distribution apparatus 100B generates a remittance transaction that includes 1 BTC, which is the cumulative consideration of the supplier 11, in which the supplier 11 is the destination, and that is locked with the hash value H. The remittance transaction management unit 101 of the consideration distribution apparatus 100B sends HTLC##1, which is the generated remittance transaction, to the temporary address 301 on the blockchain 300 (step S4). In this way, the supplier 12 sends cumulative consideration #1 locked with the hash value H and including 1 BTC to the supplier 11 (step S4').

The transaction verification unit 102 of the consideration distribution apparatus 100A of the supplier 11 verifies the validity of HTLC##1 including cumulative consideration #1 sent from the consideration distribution apparatus 100B of the supplier 12. When HTLC##1 including cumulative consideration #1 is valid, the consideration acquisition unit 103 of the consideration distribution apparatus 100A sends a release transaction in which the random number r is disclosed and the remittance transaction including the temporary address 301 on the blockchain 300 is unlocked. As a result, HTLC##1 is unlocked, and the supplier 11 acquires cumulative consideration #1, which is 1 BTC (step S5). The supplier 12 acquires the random number r from the supplier 11 (step S5').

The consideration acquisition unit 103 of the consideration distribution apparatus 100B of the supplier 12 sends, to the blockchain 300, a release transaction in which the random number r is disclosed and the remittance transaction including the temporary address 302 on the blockchain 300 is unlocked. As a result, HTLC##2 is unlocked, and the supplier 12 acquires cumulative consideration #2, which is 2 BTC (step S6). The supplier 13 acquires the random number r from the supplier 12 (step S6').

The consideration acquisition unit 103 of the consideration distribution apparatus 100C of the supplier 13 sends, to the blockchain 300, a release transaction in which the random number r is disclosed and the remittance transaction including the temporary address 303 on the blockchain 300 is unlocked. As a result, the random number r is disclosed to the consumer P (step S7'), and HTLC ##3 is unlocked. The supplier 13 acquires cumulative consideration #3, which is 3 BTC (step S7).

As described above, the supply chain system 1 according to the present embodiment applies HTLC and atomically executes a plurality of remittance transactions such that all transactions are established or all transactions are not established. For example, in a case where a certain supplier 10 may not receive a valid consideration, all of the HTLCs are rolled back after a certain period of time, and all of the suppliers 10 including the unauthorized supplier may not receive a consideration.

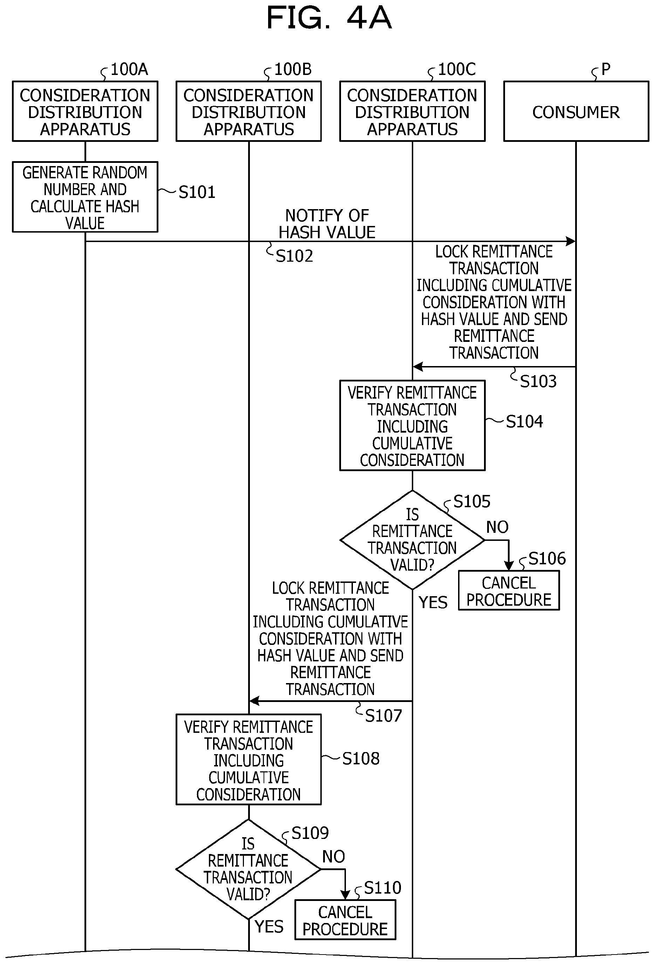

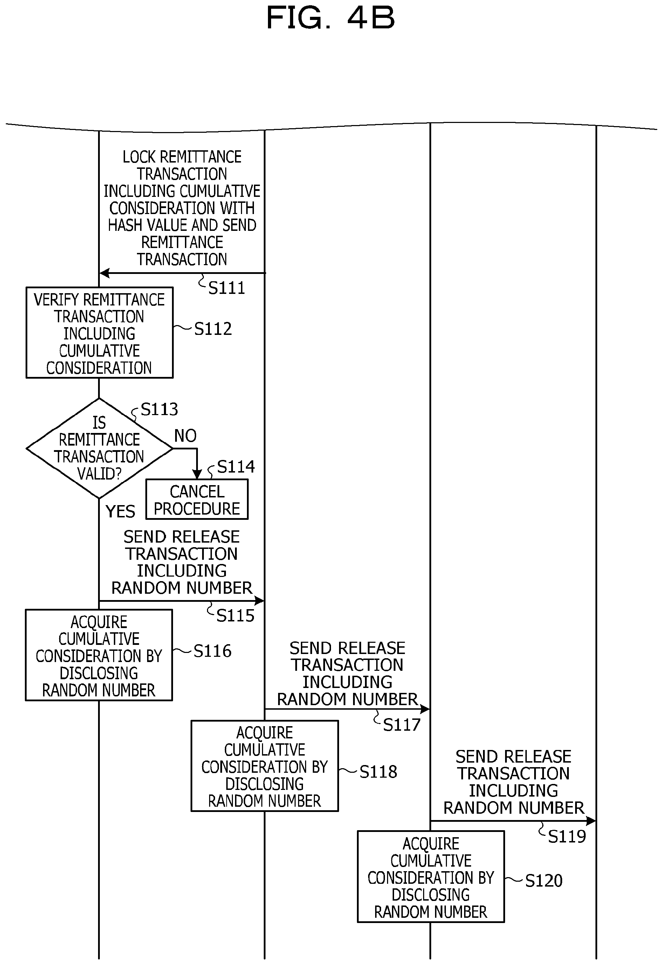

FIG. 4A and FIG. 4B are a sequence diagram of consideration distribution processing by the supply chain system according to Embodiment 1. Next, a flow of consideration distribution processing by the supply chain system 1 according to the present embodiment will be described with reference to FIG. 4A and FIG. 4B.

The random number generation unit 104 of the consideration distribution apparatus 100A generates a random number. The consideration distribution apparatus 100A calculates a hash value of the generated random number (step S101).

Next, the random number generation unit 104 of the consideration distribution apparatus 100A notifies the terminal device 20 of the consumer P of the hash value (step S102).

The terminal device 20 of the consumer P locks a remittance transaction including the cumulative consideration up to the supplier 13 with the hash value, and sends the remittance transaction to the supplier 13 (step S103).

The transaction verification unit 102 of the consideration distribution apparatus 100C verifies the remittance transaction including the cumulative consideration (step S104).

The transaction verification unit 102 of the consideration distribution apparatus 100C determines whether the remittance transaction is valid based on the verification result (step S105). When the remittance transaction is not valid (step S105: No), the consideration distribution apparatus 100C cancels the procedure (step S106).

By contrast, when the remittance transaction is valid (step S105: Yes), the remittance transaction management unit 101 of the consideration distribution apparatus 100C generates a remittance transaction including the cumulative consideration up to the supplier 12 and locked with the hash value. The remittance transaction management unit 101 of the consideration distribution apparatus 100C sends the generated remittance transaction to the supplier 12 (step S107).

The transaction verification unit 102 of the consideration distribution apparatus 100B verifies the remittance transaction including the cumulative consideration (step S108).

The transaction verification unit 102 of the consideration distribution apparatus 100B determines whether the remittance transaction is valid based on the verification result (step S109). When the remittance transaction is not valid (step S109: No), the consideration distribution apparatus 100B cancels the procedure (step S110).

By contrast, when the remittance transaction is valid (step S109: Yes), the remittance transaction management unit 101 of the consideration distribution apparatus 100B generates a remittance transaction including the cumulative consideration up to the supplier 11 and locked with the hash value. The remittance transaction management unit 101 of the consideration distribution apparatus 100B sends the generated remittance transaction to the supplier 11 (step S111).

The transaction verification unit 102 of the consideration distribution apparatus 100A verifies the remittance transaction including the cumulative consideration (step S112).

The transaction verification unit 102 of the consideration distribution apparatus 100A determines whether the remittance transaction is valid based on the verification result (step S113). When the remittance transaction is not valid (step S113: No), the consideration distribution apparatus 100A cancels the procedure (step S114).

By contrast, when the remittance transaction is valid (step S113: Yes), the transaction verification unit 102 of the consideration distribution apparatus 100A instructs the consideration acquisition unit 103 of the consideration distribution apparatus 100A to acquire the cumulative consideration. The consideration acquisition unit 103 of the consideration distribution apparatus 100A sends a release transaction including the random number generated by the random number generation unit 104 to the supplier 12 (step S115).

The consideration acquisition unit 103 of the consideration distribution apparatus 100A acquires the cumulative consideration up to the supplier 11 by disclosing the random number (step S116).

The consideration acquisition unit 103 of the consideration distribution apparatus 100B acquires the random number generated by the random number generation unit 104 from the release transaction sent from the consideration distribution apparatus 100A. The consideration acquisition unit 103 of the consideration distribution apparatus 100B sends a release transaction including the random number generated by the random number generation unit 104 to the supplier 13 (step S117).

The consideration acquisition unit 103 of the consideration distribution apparatus 100B acquires the cumulative consideration up to the supplier 12 by disclosing the random number (step S118).

The consideration acquisition unit 103 of the consideration distribution apparatus 100C acquires the random number generated by the random number generation unit 104 from the release transaction sent from the consideration distribution apparatus 100B. The consideration acquisition unit 103 of the consideration distribution apparatus 100C sends a release transaction including the random number generated by the random number generation unit 104 to the consumer P (step S119).

The consideration acquisition unit 103 of the consideration distribution apparatus 100C acquires the cumulative consideration up to the supplier 13 by disclosing the random number (step S120).

As described above, the supply chain system according to the present embodiment uses HTLC and atomically executes a remittance transaction for consideration distribution sent from the consumer and each supplier to the upstream supplier. For example, in a case where any supplier may not obtain an appropriate cumulative consideration, consideration distribution is cancelled for all of the suppliers included in the supply chain system. Accordingly, even if there is no trusted third party organization, an unauthorized act of making away with a consideration may be suppressed in consideration redistribution, and appropriate consideration distribution may be performed along the route of a supply chain. Therefore, security in a supply chain may be improved.

### [Embodiment 2]

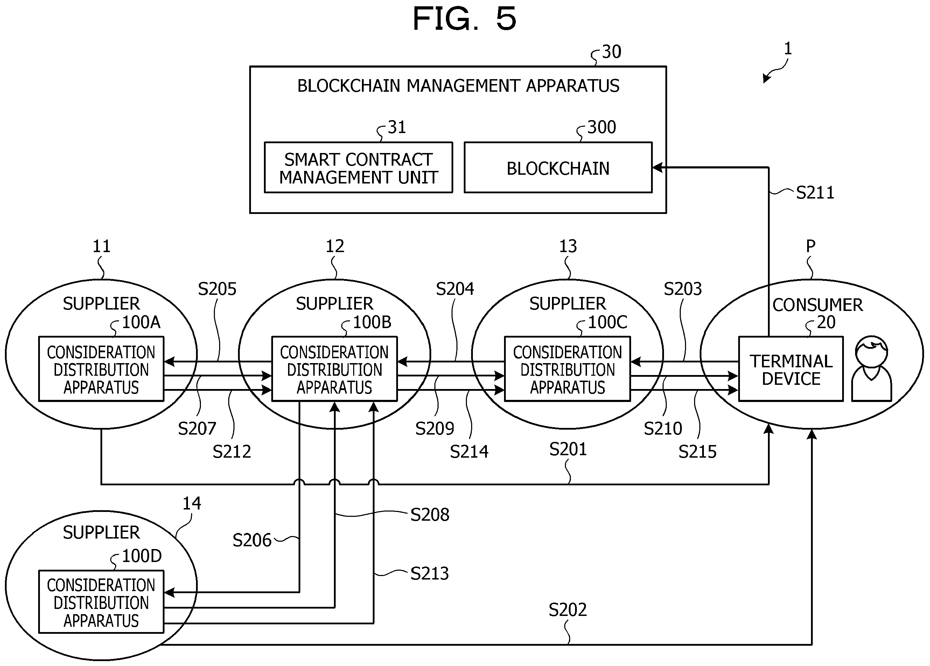

FIG. 5 is a schematic diagram of consideration distribution processing by a supply chain system according to Embodiment 2. In a supply chain system 1 according to the present embodiment, the route of a supply chain branches in the middle of the route. The supply chain system 1 according to the present embodiment includes suppliers 11 to 14. The suppliers 11 to 14 have consideration distribution apparatuses 100A to 100D, respectively.

The suppliers 11 to 13 have a route of supply chain similar to that in Embodiment 1. The supplier 14 is in charge of a process immediately upstream of the supplier 12. For example, the supplier 12 is supplied with parts from both of the suppliers 11 and 14. In the following description, there is a case in which description is given as that transmission and reception of data such as a remittance transaction are directly performed between a consumer P and the suppliers 11 to 14. However, in practice, transmission and reception of data are performed through the blockchain 300.

The most upstream suppliers 11 and 14 in the branches of the supply chain independently generate random numbers r1 and r2, respectively. For example, a random number generation unit 104 of the consideration distribution apparatus 100A generates the random number r1. The random number generation unit 104 of the consideration distribution apparatus 100D generates the random number r2. Next, the random number generation unit 104 of the consideration distribution apparatus 100A calculates a hash value H1 = hash(r1) of the random number r1, and notifies a terminal device 20 of the consumer P of the hash value (step S201). Similarly, the random number generation unit 104 of the consideration distribution apparatus 100D calculates a hash value H2 = hash(r2) of the random number r2, and notifies the terminal device 20 of the consumer P of the hash value (step S202).

The terminal device 20 of the consumer P locks a remittance transaction including a cumulative consideration by using the hash values H1 and H2, and sends the remittance transaction to the supplier 13 (step S203).

A transaction verification unit 102 of the consideration distribution apparatus 100C of the supplier 13 verifies the remittance transaction sent from the terminal device 20. If the remittance transaction is valid, a remittance transaction management unit 101 of the consideration distribution apparatus 100C of the supplier 13 locks a remittance transaction including a cumulative consideration by using the hash values H1 and H2, and sends the remittance transaction to the supplier 12 (step S204).

The transaction verification unit 102 of the consideration distribution apparatus 100B of the supplier 12 verifies the remittance transaction sent from the consideration distribution apparatus 100C of the supplier 13. If the remittance transaction is valid, the remittance transaction management unit 101 of the consideration distribution apparatus 100B generates a remittance transaction locked by using the hash value H1 and including the cumulative consideration up to the supplier 11, which is one branch of the branched route. The remittance transaction management unit 101 of the consideration distribution apparatus 100B sends, to the supplier 11, the generated remittance transaction including the cumulative consideration up to the supplier 11 (step S205). The remittance transaction management unit 101 of the consideration distribution apparatus 100B sends, to the supplier 14 which is the other one branch of the branched route, a remittance transaction including the cumulative consideration up to the supplier 14 and locked with the hash value H2 (step S206).

The transaction verification unit 102 of the consideration distribution apparatus 100A of the supplier 11 verifies the remittance transaction sent from the consideration distribution apparatus 100B of the supplier 12. If the remittance transaction is valid, the consideration acquisition unit 103 of the consideration distribution apparatus 100A of the supplier 11 adds an electronic signature to the hash value H1 and sends the remittance transaction to the immediately downstream supplier 12 (step S207).

The transaction verification unit 102 of the consideration distribution apparatus 100D of the supplier 14 verifies the remittance transaction sent from the consideration distribution apparatus 100B of the supplier 12. If the remittance transaction is valid, the consideration acquisition unit 103 of the consideration distribution apparatus 100D of the supplier 14 adds an electronic signature to the hash value H2 and sends the remittance transaction to the immediately downstream supplier 12 (step S208). As described above, in a case where the route of a supply chain is branched, each consideration distribution apparatus 100 of the leaf supplier 10 located at the tip of each branch adds an electronic signature to the hash value sent by itself and returns the remittance transaction to the downstream supplier.

The consideration acquisition unit 103 of the consideration distribution apparatus 100B of the supplier 12 receives, from the consideration distribution apparatus 100A, the electronic signature of the supplier 11 added to the hash value H1. The consideration acquisition unit 103 of the consideration distribution apparatus 100B receives, from the consideration distribution apparatus 100D, the electronic signature of the supplier 14 added to the hash value H2. The consideration acquisition unit 103 of the consideration distribution apparatus 100B sends, to the consideration distribution apparatus 100C of the supplier 13, the electronic signature of the supplier 11 added to the hash value H1 and the electronic signature of the supplier 14 added to the hash value H2 (step S209).

The consideration acquisition unit 103 of the consideration distribution apparatus 100C of the supplier 13 sends, to the terminal device 20 of the consumer P, the electronic signature of the supplier 11 added to the hash value H1 and the electronic signature of the supplier 14 added to the hash value H2 (step S210).

The terminal device 20 of the consumer P receives and verifies the electronic signatures of the leaf suppliers 11 and 14. When the validity of the electronic signatures of all leaf suppliers 11 and 14 is confirmed, the terminal device 20 of the consumer P records, on the blockchain 300, that the advance preparation is completed (step S211).

The consideration acquisition unit 103 of the consideration distribution apparatus 100A of the supplier 11 confirms the record of completion of the advance preparation on the blockchain 300, and sends, to the supplier 12, a release transaction that discloses the random number r1 (step S212). By disclosing the random number r1, the consideration acquisition unit 103 of the consideration distribution apparatus 100A of the supplier 11 acquires the cumulative consideration up to the supplier 11.

The consideration acquisition unit 103 of the consideration distribution apparatus 100D of the supplier 14 confirms the record of completion of the advance preparation on the blockchain 300, and sends, to the supplier 12, a release transaction that discloses the random number r2 (step S213). By disclosing the random number r2, the consideration acquisition unit 103 of the consideration distribution apparatus 100D of the supplier 14 acquires the cumulative consideration up to the supplier 14.

The consideration acquisition unit 103 of the consideration distribution apparatus 100B of the supplier 12 acquires the random numbers r1 and r2 from the respective release transactions. The consideration acquisition unit 103 of the consideration distribution apparatus 100B of the supplier 12 sends, to the supplier 13, a release transaction that discloses the random numbers r1 and r2 (step S214). By disclosing the random numbers r1 and r2, the consideration acquisition unit 103 of the consideration distribution apparatus 100B of the supplier 12 acquires the cumulative consideration up to the supplier 12.

The consideration acquisition unit 103 of the consideration distribution apparatus 100C of the supplier 13 acquires the random numbers r1 and r2 from the release transaction. The consideration acquisition unit 103 of the consideration distribution apparatus 100C of the supplier 13 sends, to the consumer P, a release transaction that discloses the random numbers r1 and r2 (step S215). By disclosing the random numbers r1 and r2, the consideration acquisition unit 103 of the consideration distribution apparatus 100C of the supplier 13 acquires the cumulative consideration up to the supplier 13.

As described above, in the case where the route of a supply chain is branched, each leaf supplier located at the tip of each branch adds an electronic signature to the hash value sent by itself and returns the remittance transaction to the downstream supplier. Each supplier other than the leaf suppliers transmits the electronic signatures of all upstream leaf suppliers to a consumer along the route of the supply chain. When the electronic signatures of all leaf suppliers are received and verification is finished, the consumer records on a blockchain that the advance preparation is completed. The suppliers confirm this record of completion of the advance preparation, and sequentially disclose a random number from the upstream side and acquire a cumulative consideration.

Accordingly, even in the case where the route of a supply chain is branched, appropriate consideration distribution may be performed along the route of the supply chain. Therefore, security in a supply chain may be improved.

### (Hardware Configuration)

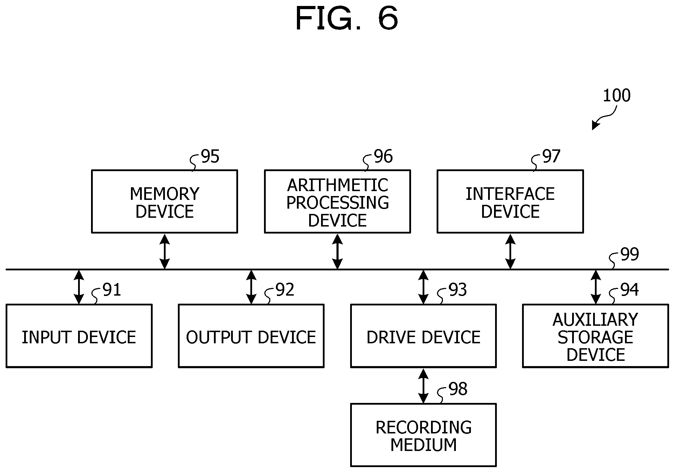

FIG. 6 is a hardware configuration diagram of a consideration distribution apparatus. Next, a hardware configuration of the consideration distribution apparatus 100 according to each embodiment will be described with reference to FIG. 6.

The consideration distribution apparatus 100 of each embodiment is an information processing apparatus including an input device 91, an output device 92, a drive device 93, an auxiliary storage device 94, a memory device 95, an arithmetic processing device 96, and an interface device 97, which are coupled to each other by a bus 99.

The input device 91 is a device for inputting various types of information, and the output device 92 is a device for outputting various types of information. The interface device 97 includes a local area network (LAN) card or the like, and is used for coupling to a network.

A consideration distribution program included in the consideration distribution apparatus 100 is at least a part of various programs included in the consideration distribution apparatus 100.

For example, these programs are provided through distribution of a storage medium 98, download from the network, or the like. As the storage medium 98 in which these programs are recorded, various types of storage media may be used, such as a storage medium that optically, electrically, or magnetically records information, such as a compact disc read-only memory (CD-ROM), a flexible disk, a magneto-optical disc, or the like, and a semiconductor memory that electrically records information, such as a ROM, a flash memory, or the like.

When the storage medium 98 in which these programs are recorded is set in the drive device 93, the consideration distribution program is installed in the auxiliary storage device 94 from the storage medium 98 via the drive device 93. The consideration distribution program downloaded from the network is installed in the auxiliary storage device 94 via the interface device 97.

The auxiliary storage device 94 stores the installed program, and stores files, data, and the like to be used. At the time of activation of the consideration distribution apparatus 100, the arithmetic processing device 96 reads various programs from the auxiliary storage device 94, and loads and stores the programs in the memory device 95. The arithmetic processing device 96 implements the functions of the remittance transaction management unit 101, the transaction verification unit 102, the consideration acquisition unit 103, and the random number generation unit 104 exemplified in FIG. 2, by executing the programs stored in the memory device 95.

The supply chain system described in each embodiment may be applied to any supply chain in which an added value is added by making changes to an object acquired from an upstream process and the object is passed to a downstream process. For example, supply chains to which the system may be applied include a supply chain in which a product is manufactured by adding parts of a machine, a supply chain related to software in which sub-components are sequentially added in the processes, and the like. Alternatively, a supply chain to which the system may be applied may be a supply chain related to publication in which a document is edited and passed to the next process, or the like.

## Claims

1. A consideration distribution program that causes at least one computer to execute a process, the process comprising:
performing verification of validity of a first transaction stored in a blockchain, the first transaction including a first cumulative consideration from a most upstream process of a supply chain to a certain process, the first transaction being locked in one step downstream process from the certain process by using a hash value based on a certain random number;
storing a second transaction in the blockchain when a result of the verification is valid, the second transaction including a second cumulative consideration from the most upstream process to one step upstream process from the certain process, the second transaction being locked;
acquiring the first cumulative consideration by unlocking the first transaction based on the certain random number; and
sending the certain random number to the one step downstream process.

2. The consideration distribution program according to claim 1, wherein the process further comprising:
generating the certain random number in the most upstream process;
acquiring a hash value based on the certain random number in the most upstream process;
acquiring, from the first transaction, the hash value acquired in the most upstream process; and
locking the second transaction by using the acquired hash value.

3. The consideration distribution program according to claim 1, wherein the process further comprising:
generating the certain random number in the most upstream process;
acquiring a hash value based on the certain random number in the most upstream process;
acquiring the first cumulative consideration by unlocking the first transaction by using the certain random number when the certain process is the most upstream process;
acquiring the first cumulative consideration by unlocking the first transaction by using the certain random number received from the one step upstream process when the certain process is not the most upstream process.

4. The consideration distribution program according to claim 1, wherein the process further comprising:
notifying a consumer who pays a total cumulative consideration of the hash value for an object provided by the supply chain, in the most upstream process; and
verifying a transaction from the consumer in a most downstream process, the transaction including the total cumulative consideration stored in the blockchain by the consumer as the first cumulative consideration; and
storing the second transaction in the blockchain when the transaction is valid.

5. The consideration distribution program according to claim 1, wherein the process further comprising:
sending, to the blockchain, a third transaction that unlocks the first transaction by disclosing the certain random number; and
acquiring the first cumulative consideration when the third transaction is confirmed as being correct.

6. The consideration distribution program according to claim 1, wherein
the supply chain includes branching, and
the process further comprising:
sending a signature of each of a plurality of most upstream processes when a verification result of the first transaction is valid;
sending, in the certain process, a signature received from the one step upstream process from the certain process to the one step downstream process from the certain process;
sending the certain random number generated by each of the plurality of most upstream processes to one step downstream process from each of the plurality of most upstream processes when a consumer who pays a total cumulative consideration of an object provided by the supply chain acquires signatures of the plurality of most upstream processes and records completion of confirmation in the blockchain; and
acquiring the first cumulative consideration in the certain process unlocking the first transaction based on the certain random number received from the one step upstream process from the certain process;
sending the certain random number received from the one step upstream process from the certain process to the one step downstream process from the certain process.

7. A consideration distribution method for a computer to execute a process comprising:
performing verification of validity of a first transaction stored in a blockchain, the first transaction including a first cumulative consideration from a most upstream process of a supply chain to a certain process, the first transaction being locked in one step downstream process from the certain process by using a hash value based on a certain random number;
storing a second transaction in the blockchain when a result of the verification is valid, the second transaction including a second cumulative consideration from the most upstream process to one step upstream process from the certain process, the second transaction being locked;
acquiring the first cumulative consideration by unlocking the first transaction based on the certain random number; and
sending the certain random number to the one step downstream process.

8. The consideration distribution method according to claim 7, wherein the process further comprising:
generating the certain random number in the most upstream process;
acquiring a hash value based on the certain random number in the most upstream process;
acquiring, from the first transaction, the hash value acquired in the most upstream process; and
locking the second transaction by using the acquired hash value.

9. The consideration distribution method according to claim 7, wherein the process further comprising:
generating the certain random number in the most upstream process;
acquiring a hash value based on the certain random number in the most upstream process;
acquiring the first cumulative consideration by unlocking the first transaction by using the certain random number when the certain process is the most upstream process;
acquiring the first cumulative consideration by unlocking the first transaction by using the certain random number received from the one step upstream process when the certain process is not the most upstream process.

10. The consideration distribution method according to claim 7, wherein the process further comprising:
notifying a consumer who pays a total cumulative consideration of the hash value for an object provided by the supply chain, in the most upstream process; and
verifying a transaction from the consumer in a most downstream process, the transaction including the total cumulative consideration stored in the blockchain by the consumer as the first cumulative consideration; and
storing the second transaction in the blockchain when the transaction is valid.

11. The consideration distribution method according to claim 7, wherein the process further comprising:
sending, to the blockchain, a third transaction that unlocks the first transaction by disclosing the certain random number; and
acquiring the first cumulative consideration when the third transaction is confirmed as being correct.

12. The consideration distribution method according to claim 7, wherein
the supply chain includes branching, and
the process further comprising:
sending a signature of each of a plurality of most upstream processes when a verification result of the first transaction is valid;
sending, in the certain process, a signature received from the one step upstream process from the certain process to the one step downstream process from the certain process;
sending the certain random number generated by each of the plurality of most upstream processes to one step downstream process from each of the plurality of most upstream processes when a consumer who pays a total cumulative consideration of an object provided by the supply chain acquires signatures of the plurality of most upstream processes and records completion of confirmation in the blockchain; and
acquiring the first cumulative consideration in the certain process unlocking the first transaction based on the certain random number received from the one step upstream process from the certain process;
sending the certain random number received from the one step upstream process from the certain process to the one step downstream process from the certain process.

13. A consideration distribution apparatus comprising:
a transaction verification unit that performs verification of validity of a first transaction stored in a blockchain, the first transaction including a first cumulative consideration from a most upstream process of a supply chain to a certain process, the first transaction being locked in one step downstream process from the certain process by using a hash value based on a certain random number;
a remittance transaction management unit that stores a second transaction in the blockchain when a result of the verification is valid, the second transaction including a second cumulative consideration from the most upstream process to one step upstream process from the certain process, the second transaction being locked;
a consideration acquisition unit that acquires the first cumulative consideration by unlocking the first transaction based on the certain random number, and sends the certain random number to the one step downstream process.
